# EUROPEAN PATENT APPLICATION

(11) **EP 4 773 391 A1**
(43) Date of publication of application: **08.07.2026**
(21) Application number: 25869631.9
(22) Date of filing: 27.06.2025
(51) Int. Cl.: H01M 50/367, H01M 50/249, H01M 50/204

(54) **BATTERY MODULE, AND BATTERY PACK AND VEHICLE INCLUDING SAME**

(30) Priority: 26.09.2024 KR 20240130390
(71) Applicant: LG Energy Solution, Ltd., Seoul 07335 (KR)
(72) Inventor: PANG, Yooseok, Daejeon 34122 (KR); MIN, Jinki, Daejeon 34122 (KR); KIM, Haeun, Daejeon 34122 (KR); PARK, Jongwook, Daejeon 34122 (KR); JEON, Sangyoon, Daejeon 34122 (KR)
(74) Representative: BCKIP Part mbB
(86) International application number: PCT/KR2025/009121
(87) International publication number: WO 2026/071405

(57) **Abstract**

A battery module according to an exemplary embodiment of the present disclosure includes battery cells, and a module case configured to form an accommodation space for accommodating the battery cells therein and including at least one venting channel provided at an upper portion and configured to guide external discharge of venting gas. According to the battery module of the present disclosure configured as described above, the upper portion of the module case is formed with the venting channel to guide the external discharge of venting gas and particles. Thereby, the back flame phenomenon in which high-temperature venting gas and particles enter adjacent venting holes can be effectively prevented.

## Description

### [Technical Field]

The present disclosure relates to a battery module, and a battery pack and a vehicle including the same, and more specifically, to a battery module in which venting gas and particles are smoothly discharged to the outside, and a battery pack and a vehicle including the same.

### [Background Art]

Secondary batteries refer to rechargeable and dischargeable batteries, unlike non-rechargeable primary batteries, and are used in a variety of applications, including not only portable devices but also electric vehicles (EVs), hybrid electric vehicles (HEVs), and the like.

Currently widely used secondary batteries include lithium-ion batteries, lithium polymer batteries, nickel-cadmium batteries, nickel-metal hydride batteries, nickel-zinc batteries, and the like. An operating voltage of such a unit secondary battery cell (i.e., a unit battery cell) is about 2.5 V to 4.6 V. When a higher output voltage is required, a plurality of battery cells may be connected in series to configure a battery pack. In addition, a plurality of battery cells may be connected in parallel to configure a battery pack according to the charge/discharge capacity required for a battery pack. The number of battery cells configuring the battery pack may be set variously according to the required output voltage or charge/discharge capacity.

When configuring a battery pack by connecting a plurality of battery cells in series or in parallel, it is common to first configure a battery module including the battery cells, and then configure a battery pack including the battery module. Here, the battery module refers to a component in which a plurality of battery cells are connected in series or in parallel, and the battery pack refers to a component in which a plurality of battery modules are connected in series or in parallel to increase a capacity, an output, and the like.

A battery module or a battery pack is inherently vulnerable to thermal events because a plurality of battery cells or a plurality of battery modules are densely packed in a space-efficient manner. In particular, when thermal runaway (TR) or the like occurs inside a battery module, high-temperature gas, flame, heat, and the like are generated, and if these are not promptly controlled, thermal propagation (TP) may cause a chain reaction of fire or explosion not only in the battery module but also in adjacent battery modules.

In the case of battery modules of the related art, venting gas and particles are discharged by applying venting holes to an upper plate to induce upward venting, but a back flame phenomenon occurs in which high-temperature venting gas and particles enter the adjacent venting holes. When the back flame phenomenon occurs, simultaneous ignition occurs rather than sequential ignition, so the thermal propagation delay effect is reduced. In addition, there is concern that the shape of the venting hole may be deformed by high-temperature venting gas and particles.

In addition, in battery modules of the related art, upper ends of a U-shaped lower plate and edges on both sides of an upper plate formed with a number of venting holes are joined by welding. However, the number of venting holes makes welding difficult, which reduces productivity and structural stability.

### [Disclosure]

### [Technical Problem]

The present disclosure has been made to solve the problems of the related art as described above, and an object of the present disclosure is to provide a battery module capable of preventing a back flame phenomenon in which venting gas and particles discharged upward are reintroduced, improving a thermal propagation delay effect, and enhancing structural stability and productivity, and a battery pack and a vehicle including the battery module.

### [Technical Solution]

To achieve the above object, a battery module according to a preferred exemplary embodiment of the present disclosure includes battery cells, and a module case configured to form an accommodation space for accommodating the battery cells therein and including at least one venting channel provided at an upper portion and configured to guide external discharge of venting gas.

The venting channel is formed to extend in a front-rear direction of the module case. The venting channel is provided in plurality, the plurality of venting channels being separately formed side by side.

An opening portion is formed in a lower portion of each of the venting channels, the opening portion being entirely or partially open so as to allow the venting gas discharged from the accommodation space to flow into the venting channel.

The opening portion may include at least one venting hole.

Each of the venting channels is closed on both side surfaces and an upper surface, open on front and rear surfaces, and provided with the opening portion in a bottom surface.

The module case includes a lower plate, and a venting guide configured to form the accommodation space inside the module case together with the lower plate and to guide the external discharge of the venting gas generated in the accommodation space and discharged to the outside.

The venting guide includes a venting channel portion including the at least one venting channel and configured to cover an upper portion of the accommodation space, and side plates extending downward from both sides of the venting channel portion and configured to cover both side portions of the accommodation space.

The venting channel portion and the side plates are integrally formed of a metal material by extrusion.

Lower ends of the side plates are joined to both side ends of the lower plate.

The accommodation space is divided into a plurality of cell placement spaces, and at least one battery cell is placed in each of the cell placement spaces.

The venting channels and the cell placement spaces are provided in the same number, and the venting channels and the cell placement spaces are arranged vertically with the venting holes interposed therebetween.

A plurality of venting gas discharge paths formed by the module case are formed separately from each other, and each venting gas discharge path leads to the cell placement space, the venting hole, and the venting channel.

### [Advantageous Effects]

According to the battery module of the present disclosure, and the battery pack and the vehicle including the battery module, the upper portion of the module case is formed with the venting channel to guide the external discharge of venting gas and particles. Thereby, the back flame phenomenon in which high-temperature venting gas and particles enter adjacent venting holes can be effectively prevented.

In addition, the module case is assembled by joining lower ends of the side plates of the venting guide to both side ends of the lower plate. Thereby, the structural stability of the module case can be improved compared to the related art in which upper ends of a U-shaped lower plate and edges on both sides of an upper plate formed with a plurality of venting holes are joined by welding.

### [Description of Drawings]

FIG. 1 is a diagram illustrating a vehicle equipped with a battery pack according to an exemplary embodiment of the present disclosure.
FIG. 2 is a diagram illustrating an aspect in which a battery module according to an exemplary embodiment of the present disclosure is accommodated in a pack case of a battery pack.
FIG. 3 is a perspective view of the battery module according to an exemplary embodiment of the present disclosure.
FIG. 4 is an exploded perspective view of the battery module according to an exemplary embodiment of the present disclosure.
FIG. 5 is an enlarged perspective view of a venting guide illustrated in FIG. 4.
FIG. 6 is a front view of the venting guide.
FIG. 7 is a bottom view of the venting guide.
FIG. 8 is a plan view of FIG. 3.
FIG. 9 is a cross-sectional view taken along line A-A of FIG. 8.
FIG. 10 is an enlarged view of part A of FIG. 9.
FIG. 11 is an exploded perspective view of a battery module according to another exemplary embodiment of the present disclosure.

### [Best Mode]

Hereinafter, a battery module according to a preferred exemplary embodiment of the present disclosure, and a battery pack and a vehicle using the battery module will be described in detail with reference to the accompanying drawings.

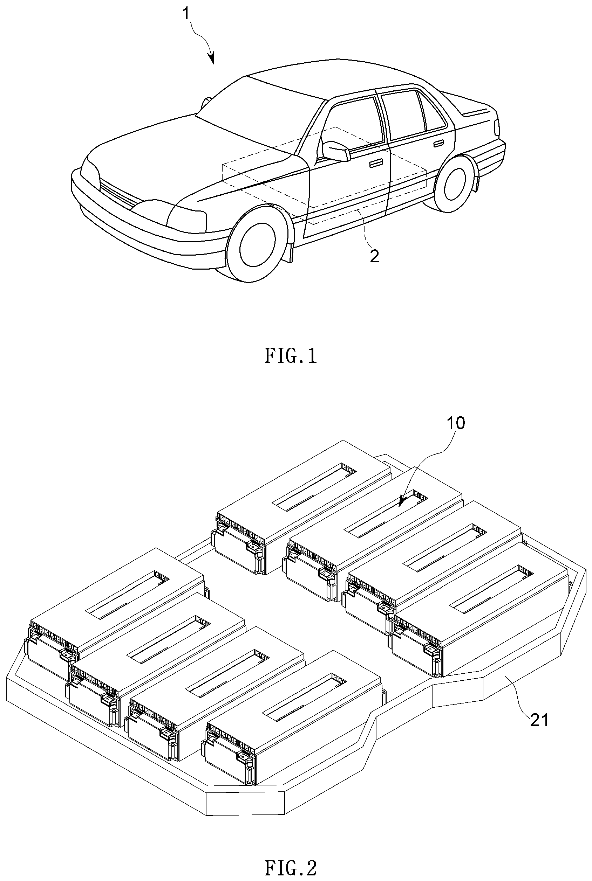

FIG. 1 is a diagram illustrating a vehicle equipped with a battery pack according to an exemplary embodiment of the present disclosure.

A vehicle 1, such as an electric vehicle or a hybrid vehicle, may be equipped with one or more battery packs 2 according to an exemplary embodiment of the present disclosure. The battery pack 2 can supply electric energy required for various operations of the vehicle 1. In addition, the vehicle 1 may further include various other components, in addition to the battery pack 2. For example, the vehicle 1 may further include a vehicle body, a motor, a control device such as an electronic control unit (ECU), and the like.

FIG. 2 is a diagram illustrating an aspect in which a battery module according to an exemplary embodiment of the present disclosure is accommodated in a pack case of a battery pack.

A plurality of battery modules 20 according to an exemplary embodiment of the present disclosure may be provided and arranged in series or in parallel within a pack case 21. FIG. 2 illustrates an example in which the battery modules 10 are arranged in two rows in parallel. As illustrated in FIG. 2, the battery modules 10 may be arranged in the left and right rows with the same number and spacing, and the battery modules arranged in the left row and the battery modules arranged in the right row may be arranged to face each other.

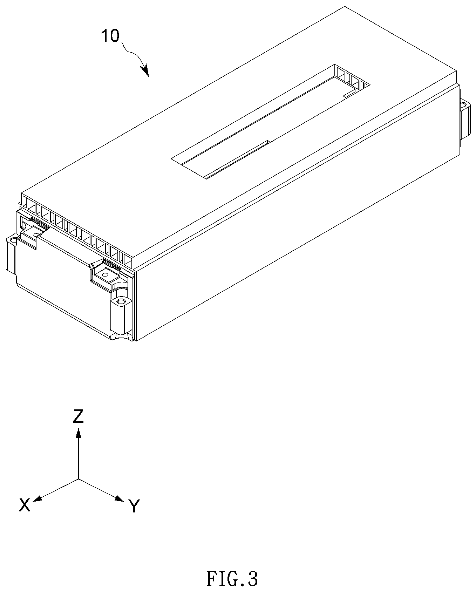

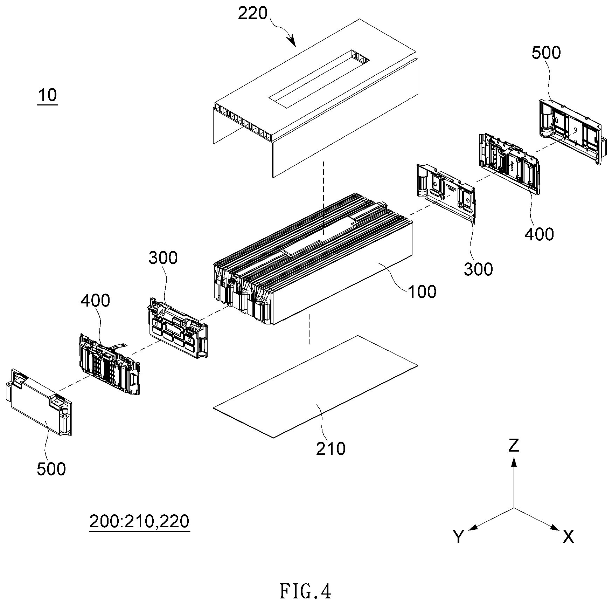

FIG. 3 is a perspective view of the battery module according to an exemplary embodiment of the present disclosure, and FIG. 4 is an exploded perspective view of the battery module according to an exemplary embodiment of the present disclosure.

The battery module 10 according to an exemplary embodiment of the present disclosure may include a battery cell stack 100, a module case 200, bus bar assemblies 300, insulating covers 400, and end plates 500.

The battery cell stack 100 includes a plurality of battery cells that are stacked with their wide surfaces facing each other, and is housed in the module case 200. Each battery cell may be a pouch type.

The module case 200 includes a lower plate 210 and a venting guide 220, and accommodates the battery cell stack 100 therein. The lower plate 210 may be formed in a flat plate shape, and the venting guide 220 may be formed in an inverted U shape of the U-shaped lower plate of the related art. The venting guide 220 forms an internal accommodation space together with the lower plate 210, and guides external discharge of venting gas and particles discharged from the internal accommodation space of the module case 200 so that they are not reintroduced into the accommodation space within the module case 200.

The busbar assemblies 300 may be positioned on both sides of the battery cell stack 100, cover both sides of the battery cell stack 100, electrically connect electrode leads of the battery cells, and guide connection between the battery cell stack 100 and an external device. Note that the busbar assembly 300 may be positioned only on one side of the battery cell stack 100 depending on the direction of the electrode leads of the battery cells constituting the battery cell stack 100.

The insulating cover 400 may include an electrically insulating material and block the electrode leads of the battery cells, terminal bus bars, and connectors bonded to the bus bar assembly 300 from coming into contact with the end plate 500.

The end plates 500 may protect the battery cell stack 100 and electrical components connected thereto from external physical impact by shielding open front and rear surfaces of the module case 200.

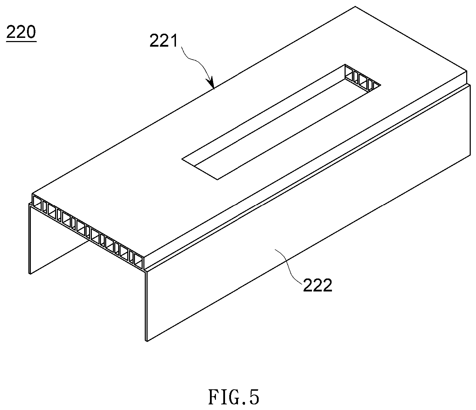

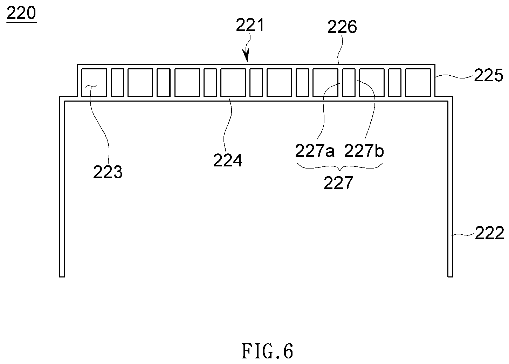

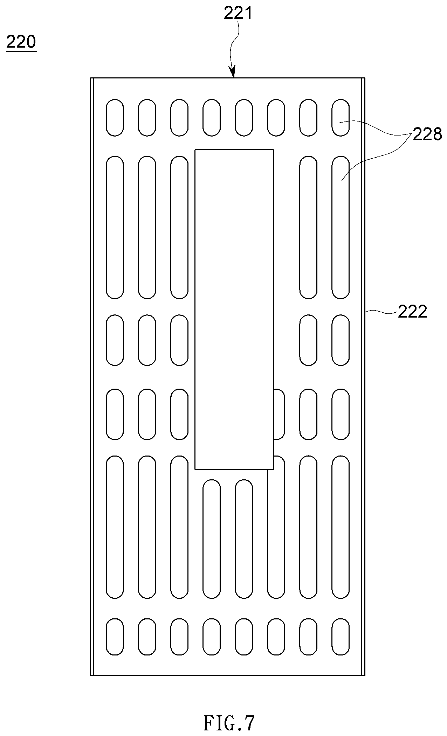

FIG. 5 is an enlarged perspective view of the venting guide illustrated in FIG. 4, FIG. 6 is a front view of the venting guide, and FIG. 7 is a bottom view of the venting guide.

As described above, the venting guide 220 constitutes the module case 200 together with the lower plate 210, forms the accommodation space inside the module case, and guides the discharge of venting gas and particles outside the accommodation space so that the venting gas and particles generated in the internal accommodation space and discharged to the outside are not reintroduced into the accommodation space. The venting guide 220 includes a venting channel portion 221 and side plates 222 and is entirely formed in in an inverted U shape.

The venting channel portion 221 constitutes an upper plate of the module case 200 and covers an upper portion of the accommodation space. The venting channel portion 221 guides the external discharge of venting gas and particles discharged from the accommodation space, and includes a plurality of venting channels 223. The venting channels 223 are formed to extend in a front-rear direction of the module case 200, and are separately formed side by side in a left-right direction. Each of the venting channels 223 is closed on an upper surface and both side surfaces, and open on front and rear surfaces. An opening portion is formed in a bottom surface of each of the venting channels 223 in a form that is entirely or partially open to be connected to the accommodation space.

The arrangement of the venting channels 223 as described above is determined in view of the fact that the battery cells accommodated in the accommodation space are arranged lengthwise in the front-rear direction and side by side in the left-right direction, and may be an optimal arrangement that allows smooth discharge of venting gas and particles.

The venting channel portion 221 includes a cover surface 224 covering the upper portion of the accommodation space, a pair of side surfaces 225 formed vertically upward from both edges of the cover surface 224 and parallel to each other, an upper surface 226 connecting the upper ends of both side surfaces 225, and a plurality of partitions 227 formed vertically between the cover surface 224 and the upper surface 226.

Lower ends of the partitions 227 are connected to the cover surface 224 and upper ends thereof are connected to the upper surface 226. Each partition 227 may include two parallel partition walls 227a and 227b to support stable maintenance of a gap between the cover surface 224 and the upper surface 226. The gap between the two partitional walls 227a and 227b is formed narrower than a gap between the partitions 227.

An internal space of the venting channel portion 221 surrounded by the cover surface 224, the side surfaces 225 and the upper surface 226 may be formed into a plurality of spaces, i.e., a plurality of venting channels 223, by the partitions 227. The adjacent venting channels 223 are blocked by the partitions 227.

The venting channels 223 are formed to extend in the front-rear direction of the module case 200 and are separately formed side by side, and an opening portion may be formed in a bottom of each of the venting channels 223 in a form that is entirely or partially open to allow the venting gas discharged from the accommodation space to flow into the venting channel, as described above.

In this exemplary embodiment, the opening portion of the venting channel 223 may include at least one venting hole 228. In the drawings, a plurality of venting holes 228 may be formed in a single row in the bottom of each venting channel 223, and may each be formed in a long hole shape. The venting holes 228 formed in a row in the bottom of each venting channel 223 may have a mixed form of holes having the same width but different lengths.

In the cover surface 224 forming the bottoms of the venting channels 223, the venting holes 228 may be formed in multiple rows corresponding to the venting channels 223.

The side plates 222 are formed downward from both side ends of the cover surface 224 constituting the venting channel portion 221, covers both side portions of the accommodation space, and are joined at lower ends to both side ends of the lower plate 210 by welding.

As described above, the venting guide 220 including the venting channel portion 221 and the side plates 222 may be integrally formed of a metal material by extrusion. The venting holes 228 formed in the venting channel portion 221 may be separately formed by post-processing such as punching or drilling.

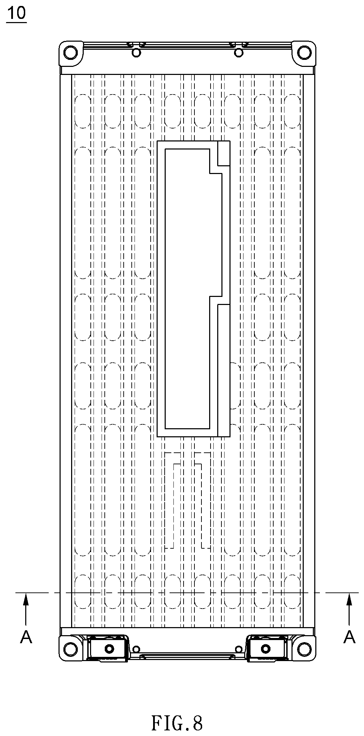

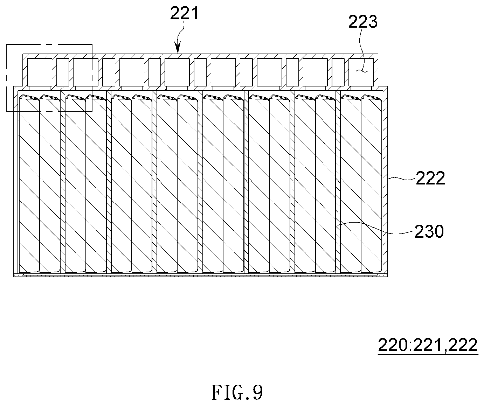

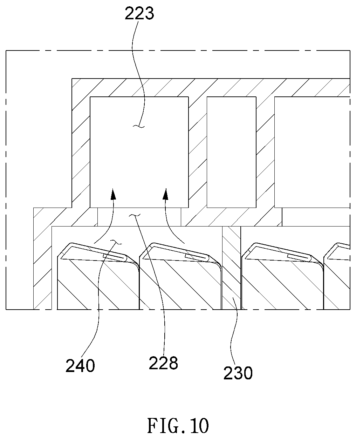

FIG. 8 is a plan view of FIG. 3, FIG. 9 is a cross-sectional view taken along line A-A of FIG. 8, and FIG. 10 is an enlarged view of part A of FIG. 9.

The accommodation space formed inside the module case 200 may be divided into a plurality of cell placement spaces 240 by a plurality of barrier members 230. At least one battery cell is placed in each of the cell placement spaces 240. The cell placement spaces 240 may be separately formed so as not to communicate with each other by the barrier members 230.

In the drawings, two battery cells are placed in one cell placement space 240. However, the present disclosure is not limited thereto, and only one battery cell or three or more battery cells may be placed. An upper portion of each cell placement space 240 is covered by the venting channel portion 221 and is connected to the venting channel 223 constituting the venting channel portion 221 via the venting hole 228.

The cell placement spaces 240 and the venting channels 223 may be provided in the same number, and the venting channels 223 may be arranged above the cell placement spaces 240 with the venting holes 228 interposed therebetween, respectively.

Therefore, the venting gas and particles generated in each cell placement space 240 are discharged to the outside of the accommodation space through the venting hole 228 formed at the upper portion thereof and are guided by the venting channel 223 located at the upper portion thereof and then discharged to the outside. Since the cell placement spaces 240 are separated from each other and the venting channels 223 are also separated from each other, the back flame phenomenon in which venting gas and particles discharged from a specific cell placement space 240 are discharged to the outside through the upper venting channel 223 and then flow into another cell placement space 240 can be effectively prevented.

In short, a discharge path of venting gas and particles generated in a specific cell placement space 240 may include the cell placement space 240, the venting hole 228, and the venting channel 223. In the battery module 10 according to the present disclosure, a plurality of discharge paths are formed separately from each other, so that venting gas and particles discharged through a specific discharge path do not affect other discharge paths.

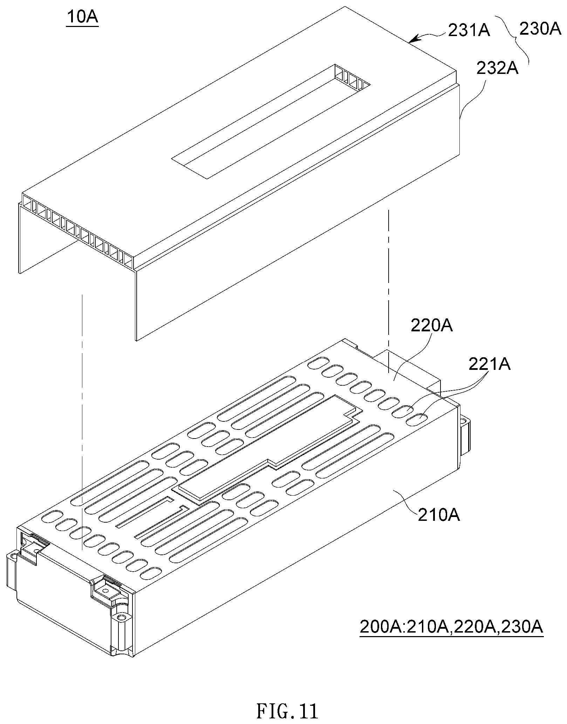

FIG. 11 is an exploded perspective view of a battery module according to another exemplary embodiment of the present disclosure.

In a battery module 10A according to another exemplary embodiment of the present disclosure, a module case 200A may include a lower plate 210A, an upper plate 220A, and a venting guide 230A.

The lower plate 210A may be formed in a U shape, and the upper plate 220A may be formed with a plurality of first venting holes 221A. Upper ends of the lower plate 210A and edges on both sides of the upper plate 220A may be joined by welding.

The first venting holes 221A of the upper plate 220A may be formed in a long hole shape. The first venting holes 221A may be formed in the same shapes and sizes as second venting holes (not illustrated) formed in the venting guide 230A.

The venting guide 230A may be manufactured in the same shape and configuration as the venting guide 220 according to an exemplary embodiment of the present disclosure. That is, the venting guide 230A may include a venting channel portion 231A and side plates 232A and may be entirely formed in an inverted U shape.

However, the venting guide 230A according to the present exemplary embodiment is placed on the upper plate 220A while covering both sides of the lower plate 210A and the upper plate 220A to guide the external discharge of venting gas and particles discharged from the first venting holes 221A of the upper plate 220A. In the present exemplary embodiment, the second venting holes constituting the venting guide 230A are identical to the venting holes 228 in the above exemplary embodiment of the present disclosure. Lower ends of the side plates 232A constituting the venting guide 230A may be joined by welding to lower ends of sides of the lower plate 210A.

Also in the present exemplary embodiment, the internal accommodation space formed by the lower plate 210A and the upper plate 220A may be separated into a plurality of cell placement spaces (not illustrated) by barrier members (not illustrated).

According to the battery module 10A according to another exemplary embodiment of the present disclosure, the discharge path of venting gas and particles generated in a specific cell placement space may include the cell placement space, the first venting hole 221A, the second venting hole, and the venting channel.

Note that, although not illustrated in the drawing, a module case may be configured by separately forming only a venting channel portion in which a plurality of venting channels are separately formed, and then joining the venting channel portion to upper ends of a U-shaped lower plate, instead of the upper plate.

Although the battery module according to the preferred exemplary embodiments of the present disclosure, and the battery pack and the vehicle including the battery module have been described in detail with reference to the accompanying drawings, the present disclosure is not limited to the above-described exemplary embodiments and may be implemented in various modified forms within the scope of the claims.

**[Description of Main Reference Numerals of Drawings]**

| | | | |
|---|---|---|---|
| 1: | Vehicle | 2: | Battery pack |
| 10: | Battery module | 100: | Battery cell stack |
| 200: | Module case | 210: | Lower plate |
| 220: | Venting guide | 221: | Venting channel portion |
| 222: | Side plate | 223: | Venting channel |
| 224: | Cover surface | 225: | Side surface |
| 226: | Upper surface | 267: | Partition |
| 228: | Venting hole | 230: | Barrier member |
| 240: | Cell placement space | 300: | Bus bar assembly |
| 400: | Insulating cover | 500: | End plate |

## Claims

1. A battery module comprising:
battery cells; and
a module case configured to form an accommodation space for accommodating the battery cells therein, and comprising at least one venting channel provided at an upper portion and configured to guide external discharge of venting gas.

2. The battery module of claim 1, wherein the venting channel is formed to extend in a front-rear direction of the module case.

3. The battery module of claim 2, wherein the venting channel is provided in plurality, the plurality of venting channels being separately formed side by side.

4. The battery module of claim 3, wherein an opening portion is formed in a lower portion of each of the venting channels, the opening portion being entirely or partially open so as to allow the venting gas discharged from the accommodation space to flow into the venting channel.

5. The battery module of claim 4, wherein the opening portion comprises at least one venting hole.

6. The battery module of claim 4, wherein each of the venting channels is closed on both side surfaces and an upper surface, open on front and rear surfaces, and provided with the opening portion in a bottom surface.

7. The battery module of claim 5, wherein the module case comprises
a lower plate, and
a venting guide configured to form the accommodation space inside the module case together with the lower plate and to guide the external discharge of the venting gas generated in the accommodation space and discharged to the outside.

8. The battery module of claim 7, wherein the venting guide comprises
a venting channel portion comprising the at least one venting channel and configured to cover an upper portion of the accommodation space, and
side plates extending downward from both sides of the venting channel portion and configured to cover both side portions of the accommodation space.

9. The battery module of claim 8, wherein the venting channel portion and the side plates are integrally formed of a metal material by extrusion.

10. The battery module of claim 9, wherein lower ends of the side plates are joined to both side ends of the lower plate.

11. The battery module of claim 5, wherein the accommodation space is divided into a plurality of cell placement spaces, and at least one battery cell is placed in each of the cell placement spaces.

12. The battery module of claim 11, wherein the venting channels and the cell placement spaces are provided in the same number, and the venting channels and the cell placement spaces are arranged vertically with the venting holes interposed therebetween.

13. The battery module of claim 12, wherein a plurality of venting gas discharge paths formed by the module case are formed separately from each other, and each venting gas discharge path leads to the cell placement space, the venting hole, and the venting channel.

14. A battery pack comprising the battery module of any one of claims 1 to 13.

15. A vehicle comprising the battery pack of claim 14.
